# EUROPÄISCHE PATENTANMELDUNG

(11) **EP 1 972 538 A1**
(43) Veröffentlichungstag der Anmeldung: **24.09.2008**
(21) Anmeldenummer: 08450036.2
(22) Anmeldetag: 13.03.2008
(51) Int. Cl.: B62M 3/08

(54) **Pedal für ein Fahrrad**

(30) Priorität: 20.03.2007 AT 4352007
(71) Anmelder: Hilber Gerhard Ing., 6380 St. Johann (AT)
(72) Erfinder: Hilber Gerhard Ing., 6380 St. Johann (AT)
(74) Vertreter: Hübscher, Helmut

(57) **Zusammenfassung**

Es wird ein Pedal für ein Fahrrad mit einem auf einer Pedalachse (1) drehbar gelagerten Träger (2) für eine vordere und eine hintere Fußauflage (3, 4) beschrieben. Um einfache Konstruktionsverhältnisse zu schaffen, wird vorgeschlagen, dass die beiden Fußauflagen (3, 4) je zwei C-förmig geformte, hochkant verlaufende Bügel (5) aufweisen, die im Bereich ihrer aneinanderliegenden Stege (6) miteinander verbunden sind und mit den von den aneinanderliegenden Stegen (6) abstehenden Schenkeln (8, 9) einerseits Befestigungsflansche (10) zur Befestigung der Fußauflagen (3, 4) auf einander bezüglich der Pedalachse (1) gegenüberliegenden Seiten des Trägers (2) und anderseits endseitige Querjoche (11) für die Fußabstützung bilden.

## Beschreibung

Die Erfindung bezieht sich auf ein Pedal für ein Fahrrad mit einem auf einer Pedalachse drehbar gelagerten Träger für eine vordere und eine hintere Fußauflage.

Um eine für einen Radfahrer vorteilhafte Krafteinleitung vom Fuß über das Pedal auf die Tretkurbel eines Fahrrades zu ermöglichen, ist es bekannt (AT 410 201 B), auf dem drehbar auf einer Pedalachse gelagerten Träger einen hochkant verlaufenden Pedalbügel vorzusehen, der eine vordere und hintere Fußauflage bildet. Der die vordere Fußauflage bildende Bügelabschnitt ist dabei auf einer quer zur Pedalachse verlaufenden Achse begrenzt verschwenkbar gelagert und trägt an seinem hinteren Schenkel einen die hintere Fußauflage bildenden Bügelabschnitt, der in seiner Neigung gegenüber der Vorfußauflage verstellbar ist. Nachteilig ist allerdings, dass die Bügelabschnitte für die vordere und die hintere Fußauflage unterschiedlich ausgebildet sind und außerdem zwischen einem linken und einem rechten Pedal unterschieden werden muss.

Der Erfindung liegt somit die Aufgabe zugrunde, ein Pedal der eingangs geschilderten Art für ein Fahrrad so auszugestalten, dass sich nicht nur einfache Herstellungsbedingungen ergeben, sondern auch eine gute Fußabstützung gewährleistet werden kann.

Die Erfindung löst die gestellte Aufgabe dadurch, dass die beiden Fußauflagen je zwei C-förmig geformte, hochkant verlaufende Bügel aufweisen, die im Bereich ihrer aneinanderliegenden Stege miteinander verbunden sind und mit den von den aneinanderliegenden Stegen abstehenden Schenkeln einerseits Befestigungsflansche zur Befestigung der Fußauflagen auf einander bezüglich der Pedalachse gegenüberliegenden Seiten des Trägers und anderseits endseitige Querjoche für die Fußabstützung bilden.

Durch das Vorsehen von zwei je für sich auf aneinander bezüglich der Pedalachse gegenüberliegenden Seiten des Trägers befestigbaren Fußauflagen für eine vordere und hintere Fußabstützung werden im Zusammenwirken mit dem Aufbau dieser Fußabstützungen aus zwei C-förmig geformten, hochkant verlaufenden Bügeln eine vorteilhafte Fußabstützung bei einer ausreichenden Belastbarkeit der Fußauflagen erreicht, weil die endseitigen Querjoche für die Fußabstützung in Schuhlängsrichtung einen ausreichenden Abstand voneinander aufweisen können, um eine über die Fußlänge verteilte, ermüdungsfreie Abstützung des Fußes auf den vorderen und hinteren Fußauflagen zu ermöglichen. Außerdem ergeben sich einfache Fertigungsbedingungen aufgrund der C-förmig geformten Bügel, die paarweise mit ihren Stegen aneinandergelegt und miteinander verbunden werden, wobei sich wegen des Hochkantverlaufes der Stege und Schenkel eine gute Belastbarkeit ergibt, sodass die vom Fuß auf das Pedal ausgeübten Kräfte über die Befestigungsflansche, die durch die von den Stegen trägerseitig abstehenden Schenkel der Bügel gebildet werden, vorteilhaft auf den Träger und vom Träger auf die jeweilige Tretkurbel übertragen werden können.

Besonders vorteilhafte Konstruktionsverhältnisse ergeben sich, wenn die Bügel bezüglich ihrer Stoßebene symmetrisch ausgebildet werden, weil in einem solchen Fall die Bügel für die vordere und die hintere Fußauflage übereinstimmend gefertigt und aus ein und derselben Bügelform linke und rechte Pedal zusammengestellt werden können. Liegt eine Symmetrie bezüglich einer durch die Pedalachse gehenden Mittelebene vor, so kann das Pedal in zwei um 180° gedrehten Gebrauchsstellungen verwendet werden, was die Handhabung für einen Fahrradbenützer erleichtert, weil nicht zwischen einer Pedalober- oder -unterseite unterschieden wird.

Um eine einfache Anpassung des Pedals an den Sohlenverlauf eines Schuhs zu erreichen, können die die Befestigungsflansche bildenden Schenkel der Bügel eine geringere Höhe als die die endseitigen Querjoche bildenden Schenkel aufweisen. Die höheren endseitigen Querjoche verringern allerdings die Bodenfreiheit bei einer Kurvenfahrt. Zum Ausgleich dafür wird die durch die Schenkel der miteinander verbundenen Bügel bestimmte Pedalbreite im Bereich der Befestigungsflansche größer als im Bereich der Querjoche gewählt.

Damit die Festigkeit der Bügel für sich und im Verbund mit dem angeschlossenen Bügel sowie dem Träger verbessert werden kann, können die die Befestigungsflanschen bildenden Schenkel der Bügel zwischen den Flanschabschnitten und den aneinanderliegenden Stegen einen sowohl gegenüber den Stegen als auch gegenüber den Flanschabschnitten abgewinkelten Verbindungsabschnitt aufweisen.

Mit der Höhe der Schenkel der hochkant verlaufenden Bügel wird die Fußabstützung bestimmt. Aus diesem Grunde empfiehlt es sich, dass die Höhe der Schenkel der hochkant verlaufenden Bügel an einen durchschnittlichen Sohlenverlauf angepasst wird. Obwohl im Allgemeinen der Sohlenverlauf weitgehend vorgegeben ist, kann es in Sonderfällen von Vorteil sein, eine zusätzliche Anpassung an einen abweichenden Sohlenverlauf vornehmen zu können. Dies kann in einfacher Weise dadurch erreicht werden, dass die Bügel aus zwei im Bereich ihrer Stege miteinander schwenkverstellbar verbundenen Teilen zusammengesetzt werden, sodass durch eine entsprechende Schwenkverstellung die die endseitigen Querjoche für die Fußabstützung bildenden Schenkel gegenüber dem Träger höher oder tiefer gestellt werden können.

Wegen der nach vorne und hinten gegenüber herkömmlichen Pedalen verlängerten Fußauflagen verringert sich die Bodenfreiheit bei bestimmten Pedal- und Tretkurbelstellungen. Um hier einen Ausgleich zu schaffen, können die Stege der Bügel in einer horizontalen Pedalstellung gegen die die endseitigen Querjoche für die Fußabstützung bildenden Schenkel hin ansteigen. Mit einem solchen Anstieg der Bügelstege muss jedoch zwischen einer Ober- und einer Unterseite des Pedals unterschieden werden. Damit das Pedal selbständig in eine Gebrauchslage mit nach oben weisender Oberseite gedreht wird, kann auf der Unterseite des Trägers ein Stabilisierungsgewicht vorgesehen sein, über das ein entsprechendes Rückstellmoment auf das Pedal ausgeübt wird, wenn es aus der Gebrauchslage herausgedreht wird.

In der Zeichnung ist der Erfindungsgegenstand beispielsweise dargestellt. Es zeigen
- Fig. 1: ein erfindungsgemäßes Pedal für ein Fahrrad in einer vereinfachten Draufsicht,
- Fig. 2: das Pedal nach der Fig. 1 in einer Seitenansicht in Richtung der Pedalachse,
- Fig. 3: eine der Fig. 1 entsprechende Darstellung einer Konstruktionsvariante eines erfindungsgemäßen Pedals und
- Fig. 4: das Pedal nach der Fig. 3 in einer Seitenansicht.

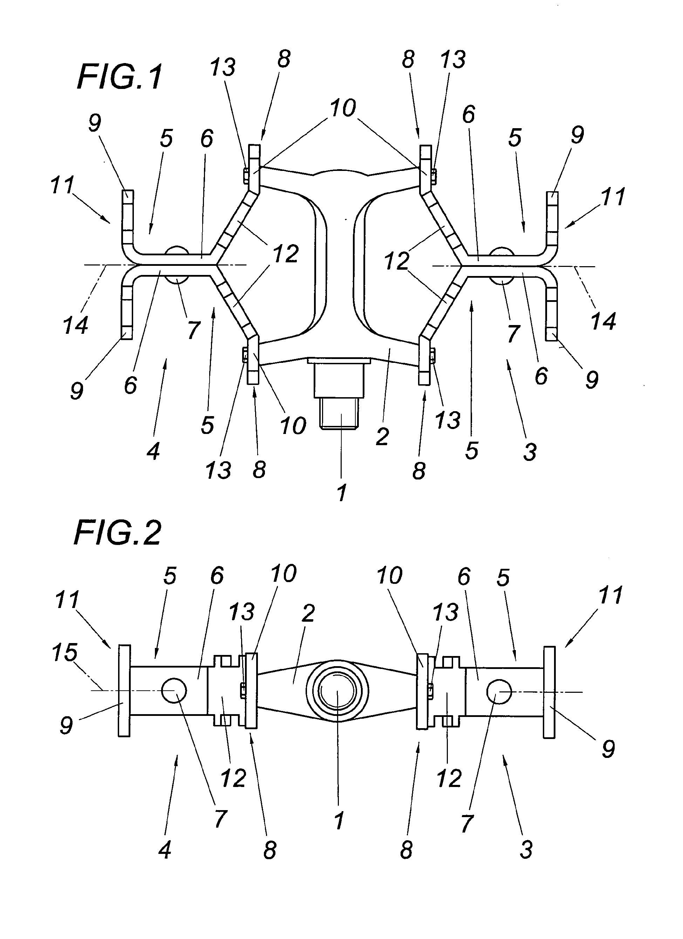

Das Pedal nach den Fig. 1 und 2 weist einen auf einer Pedalachse 1 drehbar gelagerten Träger 2 auf, an dem auf einander gegenüberliegenden Seiten der Pedalachse 1 vordere und hintere Fußauflagen 3, 4 angeordnet sind. Diese Fußauflagen 3, 4 sind in übereinstimmender Weise aus je zwei C-förmig geformten, hochkant verlaufenden Bügel 5 zusammengesetzt, die mit ihren Stegen 6 flach aneinanderliegen und mit Hilfe von Nieten 7 verbunden sind. Die von den Stegen 6 der Bügel 5 abstehenden Schenkel 8 und 9 bilden auf der Trägerseite einen Befestigungsflansch 10 und auf der vom Träger 2 abgewandten Seite ein endseitiges Querjoch 11 für die Fußabstützung. Zur Erhöhung der Steifigkeit der Fußauflagen 3 und 4 sind die trägerseitigen Schenkel 8 zwischen den Flanschabschnitten 10 und den Stegen 6 mit einem sowohl gegenüber den Stegen 6 als auch gegenüber den Flanschabschnitten 10 abgewinkelten Verbindungsabschnitt 12 versehen. Die Befestigung der Fußauflagen 3, 4 am Träger 2 erfolgt vorzugsweise über Schrauben 13. Da die Bügel 5 einerseits symmetrisch zu ihrer strichpunktiert angedeuteten Stoßebene 14 und anderseits bezüglich der Pedalachse 1 symmetrisch verlaufen, können aus den untereinander gleichen Bügeln 5 sowohl vordere als auch hintere Fußauflagen 3, 4 sowie rechte und linke Pedale gebildet werden. Die Fußabstützung auf den Fußauflagen 3, 4 erfolgt über die Schenkel 8 und 9, deren Höhe einem üblichen Sohlenverlauf angepasst ist. Dies bedeutet, dass die Schenkel 8, die die Befestigungsflansche 10 bilden, eine geringere Höhe als die die endseitigen Querjoche 11 bildenden Schenkel 9 aufweisen. Die höheren endseitigen Querjoche verringern allerdings die Bodenfreiheit bei einer Kurvenfahrt, sodass Zum Ausgleich die durch die Schenkel 8, 9 der miteinander verbundenen Bügel 5 bestimmte Pedalbreite im Bereich der Befestigungsflansche 10 größer als im Bereich der Querjoche 11 ist.

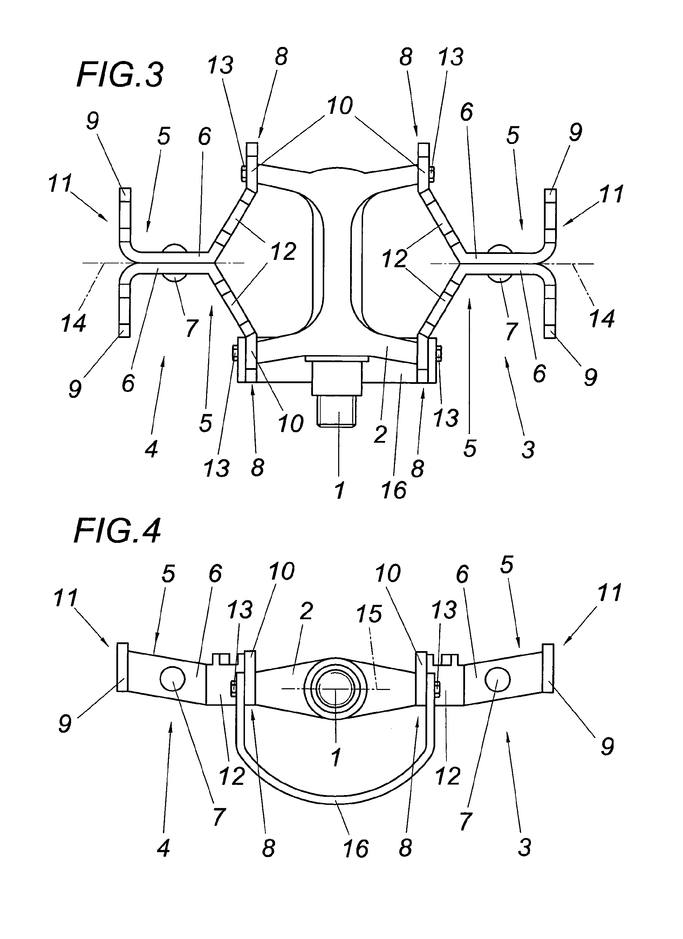

Die Pedale nach den Fig. 1 und 2 einerseits und nach den Fig. 3 und 4 anderseits sind im Wesentlichen gleich aufgebaut. Der konstruktive Unterschied zwischen den beiden Ausführungsformen besteht darin, dass nach den Fig. 1 und 2 die Fußauflagen 3 und 4 hinsichtlich einer in der Fig. 2 angedeuteten Mittelebene 15 symmetrisch ausgebildet sind, sodass die Ober- und Unterseite der Pedale übereinstimmen und es daher bei der Pedalbenützung nicht auf die jeweilige Drehstellung des Pedals ankommt. Im Gegensatz dazu steigen die Stege 6 der Bügel 5 gemäß dem Ausführungsbeispiel nach den Fig. 3 und 4 gegen die endseitigen Querjoche 11 hin an, um für eine größere Bodenfreiheit des Tretkurbeltriebes zu sorgen. Aufgrund dieser Unsymmetrie bezüglich einer Mittelebene 15 (Fig. 4) ist durch gesonderte Maßnahmen für eine vorgegebene Gebrauchslage des Pedals zu sorgen. Zu diesem Zweck ist ein Stabilisierungsgewicht 16 auf der Unterseite des Trägers 2 in Form eines auf der Pedalinnenseite angeordneten Bügels vorgesehen, dessen Gewichtsmoment für eine Rückstellung in eine in der Fig. 4 dargestellte Gebrauchslage sorgt, selbst wenn das Pedal einmal eine Drehstellung mit nach unten weisender Oberseite einnimmt.

## Patentansprüche

1. Pedal für ein Fahrrad mit einem auf einer Pedalachse (1) drehbar gelagerten Träger (2) für eine vordere und eine hintere Fußauflage (3, 4), **dadurch gekennzeichnet, dass** die beiden Fußauflagen (3, 4) je zwei C-förmig geformte, hochkant verlaufende Bügel (5) aufweisen, die im Bereich ihrer aneinanderliegenden Stege (6) miteinander verbunden sind und mit den von den aneinanderliegenden Stegen (6) abstehenden Schenkeln (8, 9) einerseits Befestigungsflansche (10) zur Befestigung der Fußauflagen (3, 4) auf einander bezüglich der Pedalachse (1) gegenüberliegenden Seiten des Trägers (2) und anderseits endseitige Querjoche (11) für die Fußabstützung bilden.

2. Pedal nach Anspruch 1, **dadurch gekennzeichnet, dass** die Bügel (5) bezüglich ihrer Stoßebene (14) symmetrisch ausgebildet sind.

3. Pedal nach Anspruch 1 oder 2, **dadurch gekennzeichnet, dass** die Bügel (5) bezüglich einer durch die Pedalachse verlaufenden Mittelebene (15) symmetrisch ausgebildet sind.

4. Pedal nach einem der Ansprüche 1 bis 3, **dadurch gekennzeichnet, dass** die die Befestigungsflansche (10) bildenden Schenkel (8) der Bügel (5) eine geringere Höhe als die die endseitigen Querjoche (11) bildenden Schenkel (9) aufweisen und dass die durch die Schenkel (8, 9) der miteinander verbundenen Bügel (5) bestimmte Pedalbreite im Bereich der Befestigungsflansche (10) größer als im Bereich der Querjoche (11) ist.

5. Pedal nach einem der Ansprüche 1 bis 4, **dadurch gekennzeichnet, dass** die die Befestigungsflansche bildenden Schenkel (8) der Bügel (5) zwischen den Flanschabschnitten und den aneinanderliegenden Stegen (6) einen sowohl gegenüber den Stegen (6) als auch gegenüber den Flanschabschnitten abgewinkelten Verbindungsabschnitt (12) aufweisen.

6. Pedal nach einem der Ansprüche 1 bis 5, **dadurch gekennzeichnet, dass** die Höhe der Schenkel (8, 9) der hochkant verlaufenden Bügel (5) an einen durchschnittlichen Sohlenverlauf angepasst ist.

7. Pedal nach einem der Ansprüche 1 bis 6, **dadurch gekennzeichnet, dass** die Bügel (5) aus zwei im Bereich ihrer Stege (6) miteinander schwenkverstellbar verbundenen Teilen zusammengesetzt sind.

8. Pedal nach einem der Ansprüche 1, 2 und 4 bis 7, **dadurch gekennzeichnet, dass** die Stege (6) der Bügel (5) in einer horizontalen Pedalstellung gegen die die endseitigen Querjoche (11) für die Fußabstützung bildenden Schenkel (9) ansteigen.

9. Pedal nach Anspruch 8, **dadurch gekennzeichnet, dass** auf der Unterseite des Trägers (2) ein Stabilisierungsgewicht (16) vorgesehen ist.
